# FASCICULE DE BREVET EUROPEEN

(11) **EP 3 220 500 B1**
(45) Date de publication et mention de la délivrance du brevet: **18.07.2018**
(21) Numéro de dépôt: 17160512.4
(22) Date de dépôt: 13.03.2017
(51) Int. Cl.: H02G 3/08, H02G 3/22, H02G 3/16

(54) **PROCÉDÉ DE FABRICATION D'UNE BOÎTE À BORNES ET BOÎTE À BORNES CORRESPONDANTE**
HERSTELLUNGSVERFAHREN EINES KLEMMENKASTENS, UND ENTSPRECHENDER KLEMMENKASTEN
A METHOD OF MANUFACTURING A TERMINAL BOX AND CORRESPONDING TERMINAL BOX

(30) Priorité: 14.03.2016 FR 1652125
(43) Date de publication de la demande: 20.09.2017
(73) Titulaire: Pioch, 06510 Carros (FR)
(72) Inventeur: PIOCH, Olivier, 06200 NICE (FR)
(74) Mandataire: Lavoix

(56) Documents cités:
- WO-A1-2005/119111
- GB-A- 786 971
- US-A- 1 032 249
- US-A- 1 761 203
- US-A1- 2015 357 806

## Description

La présente invention concerne un procédé de fabrication d'une boîte à bornes définissant un espace intérieur, le procédé comprenant au moins les étapes suivantes :
- fourniture d'une plaque à bornes, et
- fourniture d'un corps adapté pour être fixé sur la plaque à bornes, le corps comprenant un bâti, et au moins un module de sortie faisant saillie à partir du bâti vers l'extérieur de la boîte à bornes, le module de sortie étant adapté pour permettre le passage d'un câble électrique depuis l'espace intérieur vers l'extérieur de la boîte à bornes selon un axe de passage.

L'invention concerne également une boîte à bornes pouvant être obtenue par un tel procédé de fabrication.

La plaque à bornes est en général une plaque isolante traversée par des bornes de connexion formant des départs ou des arrivées pour des câbles électriques. Les modules de sortie constituent des arrivées ou des départs pour des câbles électriques connectés à l'intérieur de la boîte à bornes aux bornes de la plaque à bornes.

Le corps de la boîte à bornes est par exemple en aluminium et est obtenu par moulage. La forme du moule utilisé détermine le nombre de modules de sortie et leurs emplacements.

Ainsi, pour rentabiliser un tel moule, il est nécessaire de produire un nombre important de boîtes à bornes du même type. Il en résulte en pratique que la production est limitée à seulement quelques types de boîtes à bornes.

US-A-1 761 203 décrit une boîte à bornes.

US-A-1 032 249 décrit un tableau de distribution électrique.

US-A-2015/357806 divulgue un système de blocage de câbles dans des entrées/sorties d'un tableau électrique.

WO-A-2005/119111 décrit un connecteur de cloisonnement.

GB-A-786 971 décrit un panneau de distribution électrique ou un tableau de fusibles.

Un but de l'invention est de fournir un procédé de fabrication résolvant tout ou partie des inconvénients ci-dessus, c'est-à-dire en particulier permettant de produire un plus grand nombre de types différents de boîtes à bornes, répondant à des demandes variées en provenance de clients, et ce à un coût compétitif.

A cet effet, l'invention a pour objet un procédé de fabrication selon la revendication 1.

Selon des modes particuliers de réalisation, le procédé comprend l'une ou plusieurs des caractéristiques correspondant aux revendications 2 à 9, prise(s) isolément ou selon toutes les combinaisons techniquement possibles.

L'invention a également pour objet une boîte à bornes selon la revendication 10.

Une telle boîte à bornes est par exemple obtenue à l'aide du procédé décrit ci-dessus.

L'invention sera mieux comprise à la lecture de la description qui va suivre, donnée uniquement à titre d'exemple et faite en se référant aux dessins annexés sur lesquels :
- la figure 1 est une vue de côté d'une boîte à bornes selon l'invention,
- la figure 2 est une vue en perspective, par le dessus, de la boîte à bornes représentée sur la figure 1, le couvercle étant retiré, et
- la figure 3 est une vue en perspective, par le dessous, de la boîte à bornes représentée sur les figures 1 et 2.

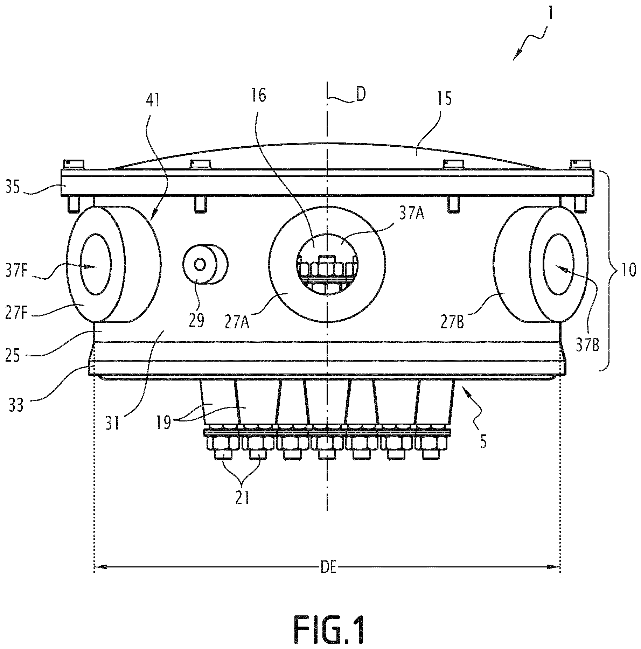

En référence aux figures 1 à 3, on décrit une plaque à bornes 1 selon l'invention. La boîte à bornes 1 comprend une plaque à bornes 5 destinée à être fixée sur un support non représenté, un corps 10 fixé sur la plaque à bornes, et un couvercle 15 fixé sur le corps.

La boîte à bornes 1 est avantageusement antidéflagrante. La boîte à bornes 1 est destinée à servir de boîte de dérivation pour des câbles électriques non représentés. La boîte à bornes 1 définit un espace intérieur 16.

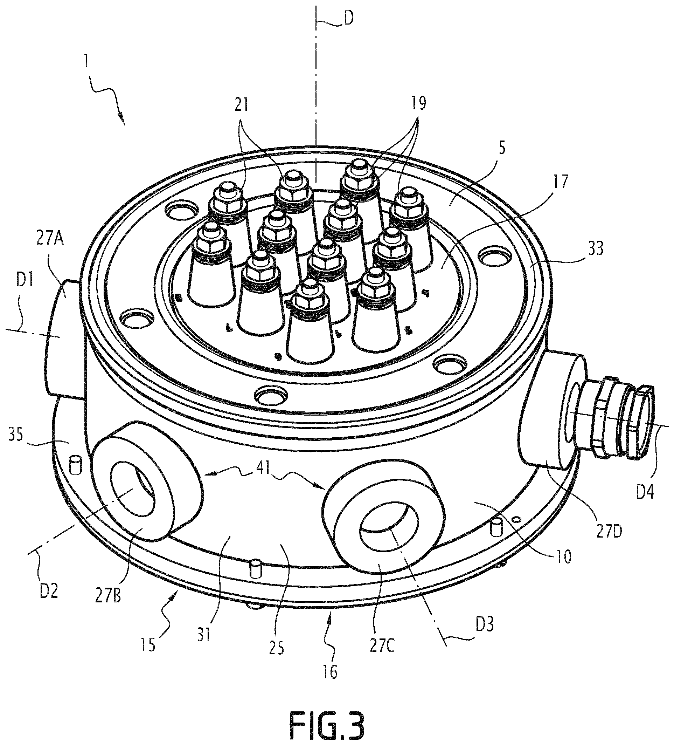

La plaque à bornes 5 comprend une plaque 17 (figure 3) par exemple sensiblement perpendiculaire à un axe D de la boîte à bornes 1, et une pluralité de bornes 19 traversant la plaque 17 sensiblement axialement.

La plaque 17 est en matière isolante, par exemple en polyamide.

Les bornes 19 sont avantageusement analogues les unes aux autres. Chaque borne 19 comporte un embout extérieur 21 destiné à être raccordé à un câble électrique extérieur (non représenté), et un embout intérieur 23 situé à l'intérieur de la boîte à bornes 1 et destiné à être connecté à un câble électrique (non représenté) la reliant à une autre des bornes 19, ou bien sortant de la boîte à bornes.

Le corps 10 et le couvercle 15 sont avantageusement en acier inoxydable, par exemple le 316L.

Le corps 10 comprend un bâti 25 ayant avantageusement une forme de révolution autour de l'axe D, et des modules de sortie 27A, 27B... 27F faisant saillie à partir du bâti, vers l'extérieur de la boîte à bornes 1. Le corps 10 comprend aussi un module 29 de mise à la masse de la boîte à bornes 1.

Le bâti 25 comprend une paroi 31, par exemple cylindrique autour de l'axe D, une première bride 33 fixée sur une extrémité de la paroi selon l'axe D, et une deuxième bride 35 fixée sur une extrémité opposée de la paroi selon l'axe D.

La paroi 31 forme par exemple une virole. La paroi 31 est avantageusement formée par un tube, notamment issu de l'industrie pétrolière, ayant un diamètre externe DE avantageusement standard, par exemple 168,3 mm.

La paroi 31 est par exemple obtenue en tant qu'élément standard existant, c'est-à-dire non fabriqué dans le procédé selon l'invention. Ceci permet de faire l'économie d'une étape de fabrication de la paroi 31.

En variante (non représentée), la paroi 31 est par exemple fabriquée à partir d'une tôle mise en forme et soudée.

La paroi 31 comprend des ouvertures 37A à 37F réalisées par perçage et correspondant respectivement aux modules de sortie 27A à 27F. Les perçages sont avantageusement circulaires autour d'axes de passage D1, D2... D6, par exemple perpendiculaires à l'axe D.

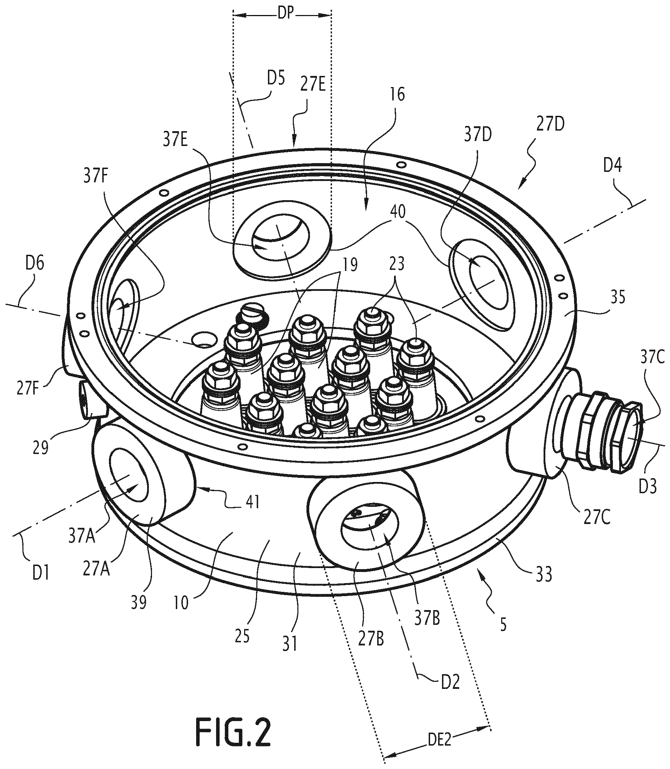

Chacune des ouvertures 37A à 37F possède un diamètre de perçage DP (figure 2).

Les axes de passage D1 à D6 sont avantageusement répartis angulairement autour de l'axe D de manière régulière. Par exemple, l'angle entre deux axes de passage consécutifs est sensiblement égal à 360° divisé par le nombre d'axes de passage.

Dans l'exemple représenté, les axes de passages sont au nombre de six et espacés de 60°. Selon un autre exemple (non représenté), les axes de passage sont au nombre de quatre et sont espacés de 90°.

La première bride 33 forme par exemple une collerette s'étendant radialement vers l'intérieur de la boîte à bornes 1. La première bride 33 comprend par exemple des perçages permettant de visser le bâti 10 sur le support, la plaque à bornes 5 étant prise en sandwich entre la première bride et le support.

La deuxième bride 35 forme par exemple une collerette radialement externe sur laquelle le couvercle 15 est avantageusement vissé.

Les modules de sortie 27A à 27F sont avantageusement analogues les uns aux autres. Aussi, seul le module de sortie 27A sera décrit ci-après.

Le module de sortie 27A comprend une portion 39 tubulaire selon l'axe de passage D1 et optionnellement taraudée. Le module de sortie 27A est adapté pour permettre le passage d'un câble électrique (non représenté) depuis l'espace intérieur 16 vers l'extérieur de la boîte à bornes 1 selon l'axe de passage D1.

La portion 39 de chacun des modules de sortie 27A à 27F présente un diamètre externe DE2 qui est avantageusement supérieur au diamètre de perçage DP des ouvertures 37A à 37F correspondantes.

La portion 39 est soudée sur la paroi 31 autour de l'axe de passage D1 de manière à fixer le module de sortie 27A sur la paroi de manière avantageusement étanche.

La portion 39 est avantageusement soudée sur la paroi 31 depuis l'intérieur de la boîte à bornes 1, par exemple sur une lèvre 40 de l'ouverture 37A à 37F correspondante.

La lèvre 40 est créée par le fait que le diamètre de perçage DP est inférieur au diamètre externe DE2.

Le couvercle 15 est par exemple vissé sur la deuxième bride 35. Le couvercle 15 est avantageusement en acier inoxydable, par exemple 316L. Le couvercle 15 est par exemple bombé, avec une convexité tournée vers l'extérieur de la boîte à bornes 1.

Un procédé de fabrication de la boîte à bornes 1 va maintenant être décrit.

Le procédé comprend une étape de fourniture de la plaque à bornes 1, une étape de fourniture du couvercle 15, et une étape de fourniture du corps 10.

La fourniture du corps 10 comprend l'obtention, séparément, de la paroi 31 du bâti 25, et des modules de sortie 25A à 25F.

La paroi 31 est par exemple obtenue en découpant un tube (non représenté) issu, par exemple, de l'industrie pétrolière. La paroi 31 est ensuite percée selon les axes de passage D1 à D6 pour obtenir les ouvertures 37A à 37F.

Dans l'exemple, l'obtention des modules de sortie 27A à 27F est analogue, aussi seule l'obtention du module de sortie 27A sera décrite ci-après.

Le module de sortie 27A est par exemple obtenu à partir d'un tronçon de tube (non représenté) dont une face 41 est usinée pour être concave, cette concavité étant adaptée pour que le module de sortie 27A épouse la forme de la paroi 31. Ledit tronçon est optionnellement taraudé.

Puis, le module de sortie 27A est soudé sur la paroi 31 autour de l'axe de passage D1, avantageusement du coté intérieur de la boîte à bornes 1, pour fixer le module de sortie au niveau de l'ouverture 37A. La lèvre 40 fond au moins partiellement pour constituer la soudure. Selon un mode de réalisation avantageux, aucune matière supplémentaire n'est apportée pour réaliser la soudure. La différence entre le diamètre de perçage DP et le diamètre externe DE2 des modules de sortie 27A à 27F est par exemple comprise entre 2 mm et 3 mm.

La première bride 33 et la deuxième bride 35 sont soudées sur la paroi 31 pour obtenir le bâti 10.

Le module 29 est également soudé sur la paroi 31.

La boîte à bornes 1 est alors prête à l'usage.

Pour installer la boîte à bornes 1, la première bride 33 est vissée sur le support de manière à prendre en sandwich la plaque à bornes 5 entre le corps 10 et le support (non représenté). Les câbles électriques (non représentés) sont passés dans les modules de sortie 27A à 27F selon les axes de passage D1 à D6 et fixés sur les embouts 23 des bornes 19.

Enfin, le couvercle 15 est fixé sur la deuxième bride 35.

Grâce aux caractéristiques décrites ci-dessus, il est possible de fabriquer la boîte à bornes 1 à faible coût, et très rapidement. Il est en outre possible de fabriquer la boîte à bornes 1 à la demande, car le nombre et les emplacements des modules de sortie sont facilement modifiables.

En outre, la paroi 31 est d'un coût réduit, car elle est obtenue à partir d'un tube standard.

De même, les modules de sortie 27A à 27F ont un coût réduit, notamment du fait qu'ils proviennent également de tubes standards.

La soudure des modules de sortie 27A à 27F sur le côté intérieur de la paroi 31, sans apport de matière autre que la lèvre 40, est également avantageuse.

## Revendications

1. Procédé de fabrication d'une boîte à bornes (1) définissant un espace intérieur (16), le procédé comprenant au moins les étapes suivantes :
- fourniture d'une plaque à bornes (5), et
- fourniture d'un corps (10) adapté pour être fixé sur la plaque à bornes (1), le corps (10) comprenant un bâti (25), et au moins un module de sortie (27A) faisant saillie à partir du bâti (25) vers l'extérieur de la boîte à bornes (1), le module de sortie (27A) étant adapté pour permettre le passage d'un câble électrique depuis l'espace intérieur (16) vers l'extérieur de la boîte à bornes (1) selon un axe de passage (D1),
**caractérisé en ce que** la fourniture du corps (10) comprend les sous-étapes suivantes :
- obtention, séparément, d'une paroi (31) du bâti (25), et du module de sortie (27A),
- perçage de la paroi (31) selon l'axe de passage (D1) pour obtenir une ouverture (37A), et
- soudage du module de sortie (27A) sur la paroi (31) autour de l'axe de passage (D1) pour fixer le module de sortie (27A) sur la paroi (31).

2. Procédé selon la revendication 1, **caractérisé en ce que** le module de sortie (27A) comprend une portion (39) de forme intérieure cylindrique, l'obtention du module de sortie (27A) comprenant un taraudage de ladite portion (39).

3. Procédé selon la revendication 1 ou 2, **caractérisé en ce que** la paroi (31) a une forme tubulaire.

4. Procédé l'une quelconque des revendications 1 à 3, **caractérisé en ce que** la fourniture du corps (10) comprend les sous-étapes suivantes :
- obtention d'une première bride (33) et d'une deuxième bride (35), séparément de la paroi (31) du bâti (25),
- fixation de la première bride (33) sur une première extrémité de la paroi (31) du bâti (25) selon un axe (D) de préférence sensiblement perpendiculaire à l'axe de passage (D1), la première bride (33) étant adaptée pour être fixée sur la plaque à bornes (5), et
- fixation de la deuxième bride (35) sur une deuxième extrémité de la paroi (31) opposée à la première extrémité selon l'axe (D), la deuxième bride (35) étant destinée à être fixée sur un couvercle (15) du bâti (25).

5. Procédé selon l'une quelconque des revendications 1 à 4, **caractérisé en ce que** le soudage du module de sortie (27A) sur la paroi (31) est réalisé du côté intérieur de la paroi (31).

6. Procédé selon l'une quelconque des revendications 1 à 5, **caractérisé en ce que** :
- le module de sortie (27A) présente un diamètre externe (DE2),
- l'ouverture (37A) présente un diamètre de perçage (DP) inférieur au diamètre externe (DE2) et définissant une lèvre (40) de l'ouverture (37A), et
- le soudage du module de sortie (27A) sur la paroi (31) est réalisé sur la lèvre (40), de préférence sans apport de matière supplémentaire.

7. Procédé selon l'une quelconque des revendications 1 à 5, **caractérisé en ce que**, préalablement au soudage du module de sortie (27A) sur la paroi (31), le module de sortie (27A) comporte une face (41) concave adaptée pour épouser la paroi (31) du bâti (25).

8. Procédé selon l'une quelconque des revendications 1 à 7, **caractérisé en ce que** le corps (10) est, à au moins 90% en masse, en acier inoxydable, par exemple en acier 316L.

9. Procédé selon l'une quelconque des revendications 1 à 8, **caractérisé en ce que** la boîte à bornes (1) est antidéflagrante.

10. Boîte à bornes (1) définissant un espace intérieur (16), la boîte à bornes (1) comprenant :
- une plaque à bornes (5), et
- un corps (10) adapté pour être fixé sur la plaque à bornes (5), le corps (10) comprenant un bâti (25), et au moins un module de sortie (27A) faisant saillie à partir du bâti (25) vers l'extérieur de la boîte à bornes (5), le module de sortie (27A) étant adapté pour permettre le passage d'un câble électrique depuis l'espace intérieur (16) vers l'extérieur de la boîte à bornes (1) selon un axe de passage (D1),
**caractérisée en ce que** le bâti (25) comporte une ouverture (37A) obtenue par perçage selon l'axe de passage (D1), le module de sortie (27A) étant une pièce rapportée fixée par soudage sur la paroi (31) du bâti (25) autour de l'axe de passage (D1).

## Patentansprüche

1. Verfahren zur Herstellung eines Klemmenkastens (1), der einen Innenraum (16) bildet, wobei das Verfahren mindestens die folgenden Schritte umfasst:
- Bereitstellung einer Klemmenplatte (5) und
- Bereitstellung eines Körpers (10), der geeignet ist, um an der Klemmenplatte (1) befestigt zu werden, wobei der Körper (10) einen Rahmen (25) umfasst, und mindestens ein Ausgangsmodul (27A), das von dem Rahmen (25) nach außen des Klemmenkastens (1) hervorsteht, wobei das Ausgangsmodul (27A) geeignet ist, um den Durchgang eines elektrischen Kabels vom Innenraum (16) nach außen des Klemmenkastens (1) entlang einer Durchgangsachse (D1) zu ermöglichen,
**dadurch gekennzeichnet, dass** die Bereitstellung des Körpers (10) die folgenden Unterschritte umfasst:
- getrenntes Erhalten einer Wand (31) des Rahmens (25) und des Ausgangsmoduls (27A),
- Bohren der Wand (31) entlang der Durchgangsachse (D1), um eine Öffnung (37A) zu erhalten, und
- Verschweißen des Ausgangsmoduls (27A) an der Wand (31) um die Durchgangsachse (D1) herum, um das Ausgangsmodul (27A) auf der Wand (31) zu befestigen.

2. Verfahren nach Anspruch 1, **dadurch gekennzeichnet, dass** das Ausgangsmodul (27A) ein Teilstück (39) mit zylindrischer innerer Form umfasst, wobei das Erhalten des Ausgangsmoduls (27A) ein Innengewinde des besagten Teilstücks (39) beinhaltet.

3. Verfahren nach Anspruch 1 oder 2, **dadurch gekennzeichnet, dass** die Wand (31) eine Röhrenform hat.

4. Verfahren nach einem der Ansprüche 1 bis 3, **dadurch gekennzeichnet, dass** die Bereitstellung des Körpers (10) die folgenden Unteretappen umfasst:
- Erhalten eines ersten Flansches (33) und eines zweiten Flansches (35), getrennt von der Wand (31) des Rahmens (25),
- Befestigen des ersten Flansches (33) an einem ersten Ende der Wand (31) des Rahmens (25) entlang einer Achse (D), die vorzugsweise im Wesentlichen senkrecht zur Durchgangsachse (D1) ist, wobei der erste Flansch (33) geeignet ist, um an der Klemmenplatte (5) befestigt zu werden, und
- Befestigen des zweiten Flansches (35) an einem zweiten Ende der Wand (31), das dem ersten Ende entlang der Achse (D) gegenüberliegt, wobei der zweite Flansch (35) dazu bestimmt ist, an einer Abdeckung (15) des Rahmens (25) befestigt zu werden.

5. Verfahren nach einem der Ansprüche 1 bis 4, **dadurch gekennzeichnet, dass** das Verschweißen des Ausgangsmoduls (27A) an der Wand (31) auf der Innenseite der Wand (31) ausgeführt wird.

6. Verfahren nach einem der Ansprüche 1 bis 5, **dadurch gekennzeichnet, dass**:
- das Ausgangsmodul (27A) einen äußeren Durchmesser (DE2) aufweist,
- die Öffnung (37A) einen Bohrungsdurchmesser (DP) aufweist, der geringer als der äußere Durchmesser (DE2) ist und eine Lippe (40) der Öffnung (37A) bildet, und
- das Verschweißen des Ausgangsmoduls (27A) an der Wand (31) an der Lippe (40) ausgeführt wird, vorzugsweise ohne Zuführung von Materialzusatz.

7. Verfahren nach einem der Ansprüche 1 bis 5, **dadurch gekennzeichnet, dass** vor dem Verschweißen des Ausgangsmoduls (27A) an der Wand (31) das Ausgangsmodul (27A) eine konkave Seite (41) aufweist, die geeignet ist, sich an die Wand (31) des Rahmens (25) anzupassen.

8. Verfahren nach einem der Ansprüche 1 bis 7, **dadurch gekennzeichnet, dass** der Körper (10) zu mindestens 90 Gewichtsprozenten aus rostfreiem Stahl besteht, zum Beispiel Stahl 316L.

9. Verfahren nach einem der Ansprüche 1 bis 8, **dadurch gekennzeichnet, dass** der Klemmenkasten (1) explosionssicher ist.

10. Klemmenkasten (1), der einen Innenraum (16) bildet, wobei der Klemmenkasten (1) umfasst:
- eine Klemmenplatte (5), und
- einen Körper (10), der geeignet ist, um an der Klemmenplatte (5) befestigt zu werden, wobei der Körper (10) einen Rahmen (25) umfasst, und mindestens ein Ausgangsmodul (27A), das von dem Rahmen (25) nach außen des Klemmenkastens (5) hervorsteht, wobei das Ausgangsmodul (27A) geeignet ist, um den Durchgang eines elektrischen Kabels vom Innenraum (16) nach außen des Klemmenkastens (1) entlang einer Durchgangsachse (D1) zu ermöglichen,
**dadurch gekennzeichnet, dass** der Rahmen (25) eine Öffnung (37A) umfasst, die durch Bohren entlang der Durchgangsachse (D1) erhalten wird, wobei das Ausgangsmodul (27A) ein aufgesetztes Teil ist, das durch Verschweißen an der Wand (31) des Rahmens (25) herum um die Durchgangsachse (D1) befestigt ist.

## Claims

1. Method of manufacturing a terminal box (1) defining an interior space (16), the method comprising at least the following steps:
- providing a terminal board (5), and
- providing a body (10) adapted to be fixed to the terminal board (1), the body (10) comprising a frame (25) and at least one output module (27A) protruding from the frame (25) towards the outside of the terminal box (1), the output module (27A) being adapted to permit the passage of an electric cable from the interior space (16) to the outside of the terminal box (1) along a passage axis (D1),
**characterised in that** the step of providing the body (10) comprises the following sub-steps:
- obtaining, separately, a wall (31) of the frame (25), and the output module (27A),
- drilling the wall (31) along the passage axis (D1) in order to obtain an opening (37A), and
- welding the output module (27A) to the wall (31) around the passage axis (D1) in order to fix the output module (27A) to the wall (31).

2. Method according to claim 1, **characterised in that** the output module (27A) comprises a portion (39) having a cylindrical inner shape, the step of obtaining the output module (27A) comprising tapping said portion (39).

3. Method according to claim 1 or 2, **characterised in that** the wall (31) has a tubular shape.

4. Method according to any one of claims 1 to 3, **characterised in that** the step of providing the body (10) comprises the following sub-steps:
- obtaining a first flange (33) and a second flange (35), separately from the wall (31) of the frame (25),
- fixing the first flange (33) to a first end of the wall (31) of the frame (25) along an axis (D) which is preferably substantially perpendicular to the passage axis (D1), the first flange (33) being adapted to be fixed to the terminal board (5), and
- fixing the second flange (35) to a second end of the wall (31) opposite the first end along the axis (D), the second flange (35) being intended to be fixed to a cover (15) of the frame (25).

5. Method according to any one of claims 1 to 4, **characterised in that** the welding of the output module (27A) to the wall (31) is carried out from the inner side of the wall (31).

6. Method according to any one of claims 1 to 5, **characterised in that**:
- the output module (27A) has an outside diameter (DE2),
- the opening (37A) has a bore diameter (DP) which is smaller than the outside diameter (DE2) and defines a lip (40) of the opening (37A), and
- welding of the output module (27A) to the wall (31) is carried out on the lip (40), preferably without supplying additional material.

7. Method according to any one of claims 1 to 5, **characterised in that**, prior to the welding of the output module (27A) to the wall (31), the output module (27A) has a concave face (41) adapted to follow the wall (31) of the frame (25).

8. Method according to any one of claims 1 to 7, **characterised in that** the body (10), to the extent of at least 90% by mass, is made of stainless steel, for example of 316L steel.

9. Method according to any one of claims 1 to 8, **characterised in that** the terminal box (1) is explosion-proof.

10. Terminal box (1) defining an interior space (16), the terminal box (1) comprising:
- a terminal board (5), and
- a body (10) adapted to be fixed to the terminal board (5), the body (10) comprising a frame (25) and at least one output module (27A) protruding from the frame (25) towards the outside of the terminal box (5), the output module (27A) being adapted to permit the passage of an electric cable from the interior space (16) to the outside of the terminal box (1) along a passage axis (D1),
**characterised in that** the frame (25) comprises an opening (37A) obtained by drilling along the passage axis (D1), the output module (27A) being an attached part fixed by welding to the wall (31) of the frame (25) around the passage axis (D1).
